# EUROPEAN PATENT APPLICATION

(11) **EP 4 738 491 A1**
(43) Date of publication of application: **06.05.2026**
(21) Application number: 25829254.9
(22) Date of filing: 23.01.2025
(51) Int. Cl.: H01M 8/04298, H01M 8/04694, H01M 8/04992, H02J 7/00

(54) **POWER SUPPLY DEVICE APPLIED TO FUEL CELLS AND OPERATION METHOD THEREFOR**

(30) Priority: 19.06.2024 US 202463661883 P
(71) Applicant: Delta Electronics, Inc., Taoyuan City 333 (TW)
(72) Inventor: PENG, Yung-wei, Taoyuan City Taiwan 333 (TW); HUANG, Chia-hsiong, Taoyuan City Taiwan 333 (TW); HSU, Che-jung, Taoyuan City Taiwan 333 (TW); YANG, Yung-hsiang, Taoyuan City Taiwan 333 (TW); HSU, Hsueh-wen, Taoyuan City Taiwan 333 (TW); TSAI, Terng-wei, Taoyuan City Taiwan 333 (TW); HUNG, Chung-yu, Taoyuan City Taiwan 333 (TW)
(74) Representative: Nederlandsch Octrooibureau
(86) International application number: PCT/CN2025/074372
(87) International publication number: WO 2025/260761

(57) **Abstract**

A power supply device applied to fuel cells, comprising a power conversion circuit and a control circuit. The power conversion circuit is configured to output corresponding power to a load on the basis of a power input signal of a fuel cell. The control circuit is configured to generate an input current control signal on the basis of an input power command and a power ramp rate command, or an input current command and a current ramp rate command, and a measured power value or a measured current value. On the basis of the input current control signal, the control circuit generates a control signal, and accordingly controls the power conversion circuit to adjust the power or current of the power input signal of the fuel cell. The input current of the power supply device can reach the expected target more quickly, and the power supply device is prevented from excessively drawing input power or current from the fuel cell. The present application also relates to an operation method.

## Description

### BACKGROUND

### Technical field

The present disclosure relates to a power supply unit, and in particular, to a power supply unit for a fuel cell and an operating method thereof.

### Description of Related Art

In the application of a general existing power supply unit, an input end of the power supply unit is coupled to an input power source, and a power conversion circuit is configured to convert a voltage, a current, or a power according to various load requirements to provide appropriate electric power to a load. However, in the application in which an existing power supply unit uses a fuel cell as an input power source, the fuel cell cannot immediately provide a required current or power to the power conversion circuit due to the restriction of a reaction rate of its fuel. Therefore, in an existing manner, a current control device is provided between the fuel cell and the power conversion circuit to restrict the rate at which the power conversion circuit extracts a current from the fuel cell, thereby avoiding over-consuming or damaging the fuel cell caused by the power conversion circuit extracting an excessive large current or power from the fuel cell.

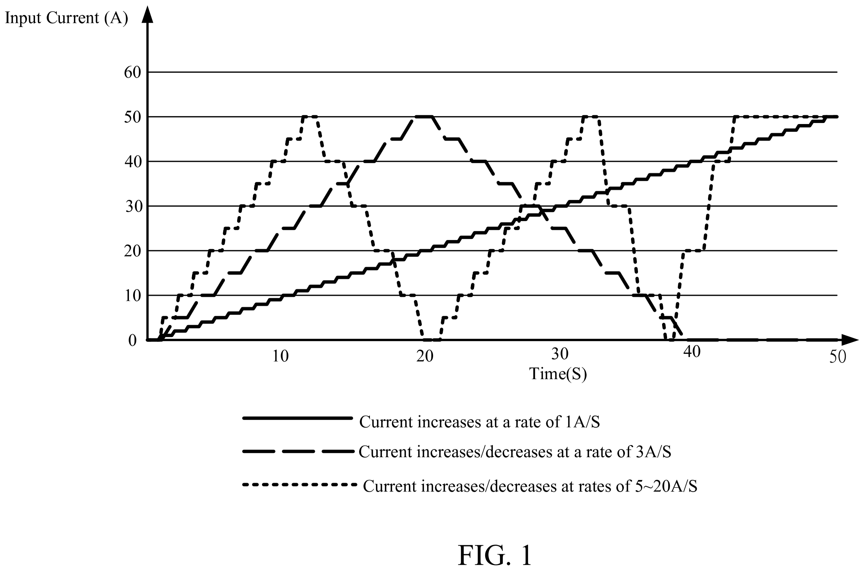

The current control device is often implemented using a variable resistor or a semiconductor element operating in a variable resistor mode, which not only consumes additional energy but also affects the reaction speed and performance of the power supply unit. FIG. 1 is a timing diagram of an input current of a power conversion circuit of a fuel cell at different current change rates. Due to the reaction time of the current control device, an output delay is caused after the output of the fuel cell passes through the current control device. As a result, the input current of the power conversion circuit rises or falls in a step-like manner, which is more obvious when the current rises and falls at a relatively high rate, resulting in reduction of the reaction speed and performance of the power supply unit.

### SUMMARY

Therefore, it is necessary to improve a power supply unit of an existing fuel cell to resolve the above technical problems. An aspect of the present disclosure is a power supply unit. The power supply unit is coupled to a fuel cell and a load. The power supply unit comprises a power conversion circuit and a control circuit. The power conversion circuit comprises a power conversion input end configured to be coupled to the fuel cell and a power conversion output end configured to be coupled to the load. The power conversion circuit correspondingly outputs an electric power output signal to the load based on an electric power input signal of the fuel cell. The control circuit is coupled to the power conversion circuit. The control circuit is configured to perform: correspondingly generating an input current control signal based on an input power command and a power change rate command or based on an input current command and a current change rate command, and based on a measured power value or a measured current value; generating an output current control signal based on the input current control signal and an output current measurement value; generating an output voltage control signal based on a reference voltage value and an output voltage measurement value; and generating a power conversion control signal based on at least one of the output current control signal and the output voltage control signal, to control the power conversion circuit to adjust a power of the electric power input signal of the fuel cell based on the power change rate command, or to control the power conversion circuit to adjust a current of the electric power input signal of the fuel cell based on the current change rate command.

Another aspect of the present disclosure is an operating method applied to a power supply unit. The operating method comprises: receiving an electric power input signal from a fuel cell; correspondingly generating an input current control signal based on an input power command and a power change rate command or based on an input current command and a current change rate command, and based on a measured power value or a measured current value; generating an output current control signal based on the input current control signal and an output current measurement value; generating an output voltage control signal based on a reference voltage value and an output voltage measurement value; and generating a power conversion control signal based on at least one of the output current control signal and the output voltage control signal, to control the power supply unit to adjust a power of the electric power input signal of the fuel cell based on the power change rate command, or to control the power supply unit to adjust a current of the electric power input signal of the fuel cell based on the current change rate command.

The present disclosure provides a power supply unit for a fuel cell and an operating method thereof. A power conversion control signal is generated for a power conversion circuit based on an input power command or an input current command, a power change rate command or a current change rate command, a measured current value, and a measured power value received by a control circuit, so that the power conversion circuit adjusts the input power or the input current based on the power conversion control signal to avoid damage to the fuel cell caused by the power supply unit over-extracting an excessive large input power or input current from the fuel cell.

### BRIEF DESCRIPTION OF THE DRAWINGS

The present disclosure may be more fully understood by reading the detailed descriptions of the following embodiments with reference to the following drawings:
FIG. 1 is a timing diagram showing a change in a current magnitude when a power conversion circuit used with a fuel cell adjusts an input current input from the fuel cell;
FIG. 2 is a functional block diagram of a power supply unit according to some embodiments of the present disclosure;
FIG. 3 is a functional block diagram of an internal structure of the control circuit shown in FIG. 2; and
FIG. 4 is a timing diagram of a change in a current magnitude when a power supply unit of the present disclosure adjusts an input current input from a fuel cell.

Reference Signs Explanation:
100: power supply unit
110: power conversion circuit
120: control circuit
121: input signal control circuit
121a: reference generation circuit
121b: input signal difference generation circuit
121c: input signal control generation circuit
122: output current control circuit
122a: current integration circuit
122b: output current controller
123: output voltage control circuit
123a: voltage integration circuit
123b: output voltage controller
124: multiplexer
125: signal modulation circuit
140: input current detection circuit
150: input power detection circuit
160: output voltage detection circuit
170: output current detection circuit
200: fuel cell
210: fuel cell controller
300: load
Pin: input power
Pcmd: input power command
Prate: power change rate command
Pref: target reference power value
PD: input power difference
Iin: input current
Iout: output current
Ioc: output current control signal
Icmd: input current command
Irate: current change rate command
Iref: target reference current value
Idif: current difference value
ID: input current difference
Vin: input voltage
Vout: output voltage
Voc: output voltage control signal
Vref: reference voltage value
Vdif: voltage difference value
A1: modulation control signal
CI: input current control signal
SD: state information
S1, S2, S3: curve
MP: measured power value
MI: measured current value
MV: output voltage measurement value
MO: output current measurement value
Pc: power conversion control signal

### DETAILED DESCRIPTION

Embodiments are described in detail below with the accompanying drawings, and the specific embodiments described are only used to explain the case and are not used to limit the case. The descriptions of a structure operation are not used to limit the execution sequence. Any structure reassembled by elements to produce a device with equal functions is within the scope of the present disclosure.

Unless otherwise specified, the terms used throughout the specification and the claims generally have the ordinary meanings of each term used in the art, in the context of the present disclosure, and in the specific context.

As used herein, "coupling" may refer to two or more elements being in direct physical or electrical contact with each other, or being in indirect physical or electrical contact with each other, or may refer to two or more elements operating or moving with each other.

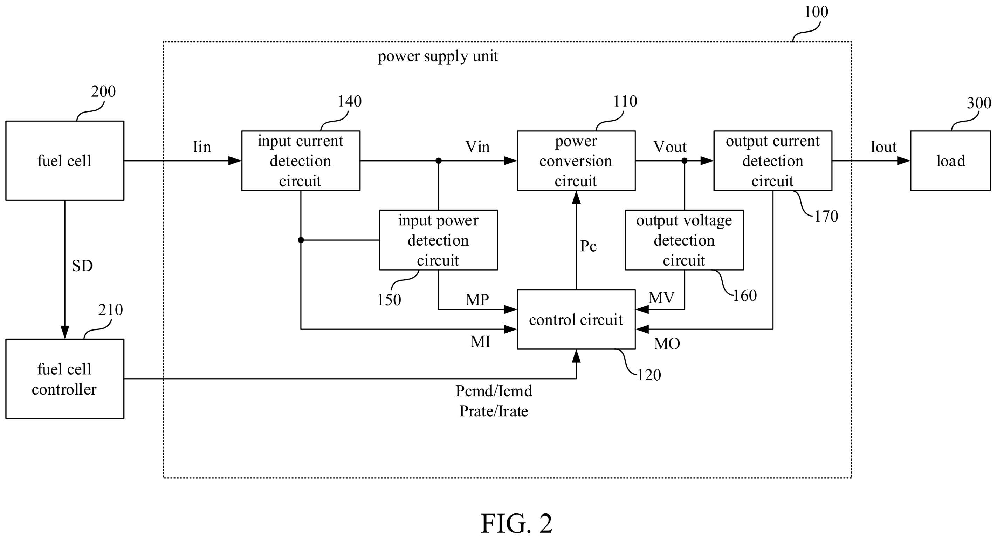

FIG. 2 is a block diagram of an embodiment of a power supply unit 100 according to the present disclosure. The power supply unit 100 is coupled between a fuel cell 200 and a load 300. The power supply unit 100 is configured to draw an input current Iin from the fuel cell 200, convert the input current into a suitable power specification (for example, a specific voltage, current, or power), and supply power to the load 300. The power supply unit 100 includes a power conversion circuit 110, a control circuit 120, an input current detection circuit 140, an input power detection circuit 150, an output voltage detection circuit 160, and an output current detection circuit 170.

In one embodiment, the power conversion circuit 110 may use an isolated or non-isolated AC-DC converter, DC-DC converter, DC-AC converter, AC-AC converter, or another suitable power conversion architecture. The control circuit 120 may be implemented by one or more suitable circuit elements such as a microcontroller unit (MCU), a central processing unit (CPU), and an application specific integrated circuit (ASIC). The input current detection circuit 140 and the output current detection circuit 170 may be implemented by suitable circuit elements such as current transducers. The input power detection circuit 150 and the output voltage detection circuit 160 may be implemented by suitable circuit elements such as voltage sensors. The fuel cell 200 may be implemented by a suitable type of fuel cell, for example, a proton exchange membrane fuel cell (PEMFC) or an alkaline fuel cell (AFC).

When an output load increases, if the fuel cell 200 needs to increase its power supply, more reaction gas needs to be introduced, and the fuel cell 200 needs to be given certain reaction time to increase an output power. In this case, if an excessive current is forcibly extracted from the fuel cell 200 too early, the fuel cell 200 may not be able to provide the required current and may cause excessive consumption and damage to the fuel cell 200. The power supply unit 100 of the present disclosure may receive the input current Iin from the fuel cell 200 at an appropriate rate without causing damage to the fuel cell 200, while taking into account the output performance of the power supply unit 100.

In one embodiment, to make the fuel cell 200 operate normally, a fuel cell controller 210 may generate an input power command Pcmd and a power change rate command Prate corresponding to the fuel cell 200 to specify the power and power change rate that the fuel cell 200 can provide. In another embodiment, the fuel cell controller 210 may also generate an input current command Icmd and a current change rate command Irate corresponding to the fuel cell 200 to specify the current and current change rate that the fuel cell 200 can provide.

In one embodiment, the control circuit 120 receives the input power command Pcmd and the power change rate command Prate (and/or receives the input current command Icmd and the current change rate command Irate) from the fuel cell controller 210. The control circuit 120 controls a power and/or a current based on the input power command Pcmd and the power change rate command Prate (and/or based on the input current command Icmd and the current change rate command Irate). In addition, in addition to receiving the foregoing commands from the fuel cell controller 210, the control circuit 120 further correspondingly generates a power conversion control signal Pc to the power conversion circuit 110 based on a measured current value MI detected by the input current detection circuit 140, a measured power value MP detected by the input power detection circuit 150, an output voltage measurement value MV detected by the output voltage detection circuit 160, and an output current measurement value MO generated by the output current detection circuit 170, so that the power conversion circuit 110 adjusts an output power Pout or an output current Iout based on the power conversion control signal Pc.

The power change rate command Prate is used to indicate a change amplitude of the output power of the fuel cell 200 (that is, the input power Pin of the power supply unit 100) within a permissible range in unit time. The current change rate command Irate is used to indicate an amplitude of the output current of the fuel cell 200 (that is, the input current Iin of the power supply unit 100) that can be changed in unit time. The control circuit 120 correspondingly set, based on the power change rate command Prate or the current change rate command Irate that the fuel cell 200 can bear, the power conversion circuit 110 to supply the output current Iout or output power Pout to the load 300. In this way, this can ensure that the power supply unit 100 does not extract too much input power Pin or input current Iin from the fuel cell 200, and can also prevent the input power Pin or the input current Iin extracted by the power conversion circuit 110 from changing too quickly, resulting in inadequate reaction at a fuel cell 200 end (for example, control of a gas flow rate cannot be changed in time).

As shown in the embodiment of FIG. 2, the power conversion circuit 110 receives the electric power input signal of the fuel cell 200 (including an input voltage Vin and/or the input current Iin shown in FIG. 2), and converts the electric power input signal into an appropriate output voltage and output current. The power conversion circuit 110 outputs the electric power output signal (including the output voltage Vout and/or the output current Iout shown in FIG. 2) to the load 300.

The input current detection circuit 140 is coupled to the fuel cell 200 and the power conversion circuit 110 and is configured to detect the input current Iin to correspondingly generate the measured current value MI.

The input power detection circuit 150 is coupled to the input current detection circuit 140 and the power conversion circuit 110 to detect the input voltage Vin and generate the measured power value MP based on the measured current value MI and the detected input voltage Vin. In another embodiment, the input power detection circuit 150 may be configured to detect the input voltage Vin and the input current Iin, and correspondingly generate the measured power value MP based on the detected input voltage Vin and the detected input current Iin.

The output voltage detection circuit 160 is coupled to the power conversion circuit 110 and is configured to detect the output voltage Vout to generate an output voltage measurement value MV.

The output current detection circuit 170 is coupled to the power conversion circuit 110 and is configured to detect the output current Iout to generate the output current measurement value MO.

In the embodiment of FIG. 2, the fuel cell controller 210 receives state information SD from the fuel cell 200 and generates at least one of the input power command Pcmd and the input current command Icmd, and generates at least one of the power change rate command Prate and the current change rate command Irate. In one embodiment, the state information SD includes information such as flow rate information of reaction gases (for example, hydrogen and air) in the fuel cell 200, external humidification ratio, and temperature.

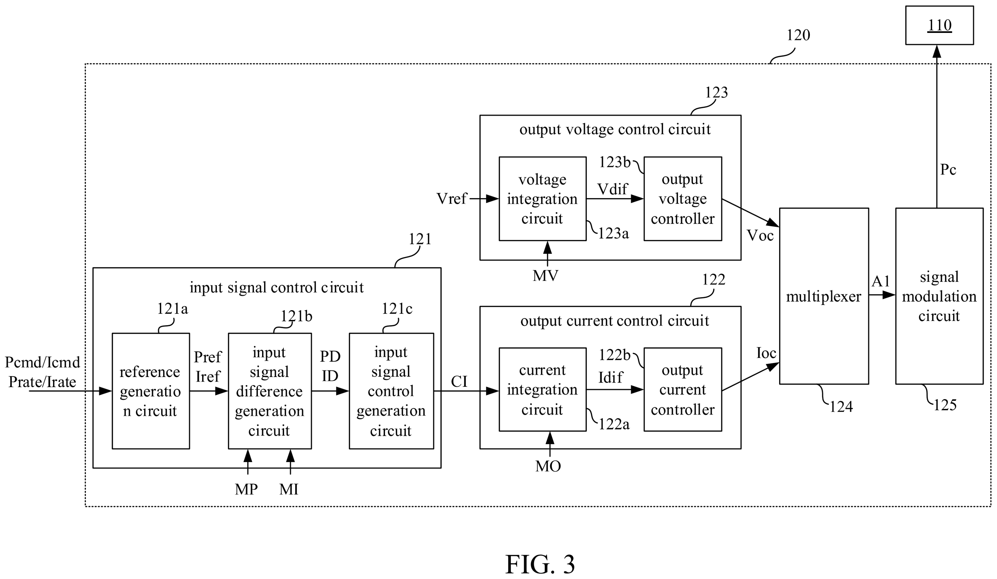

FIG. 3 is a partial block diagram of an embodiment of the control circuit 120 of FIG. 2. For the ease of description, other functional blocks and/or circuits are not shown in FIG. 2 and FIG. 3. For example, the control circuit 120 may also include a communication circuit configured to receive the input power command Pcmd and the power change rate command Prate (or the input current command Icmd and the current change rate command Irate) from the fuel cell controller 210.

As shown in the embodiments of FIG. 2 and FIG. 3, the control circuit 120 is coupled to the fuel cell 200 and the power conversion circuit 110, and includes an input signal control circuit 121, an output current control circuit 122, an output voltage control circuit 123, a multiplexer 124, and a signal modulation circuit 125.

The input signal control circuit 121 includes a reference generation circuit 121a, an input signal difference generation circuit 121b, and an input signal control generation circuit 121c. The reference generation circuit 121a is configured to correspondingly generate a target reference power value Pref and/or a target reference current value Iref based on the input power command Pcmd and the power change rate command Prate, and/or based on the input current command Icmd and the current change rate command Irate. The input signal difference generation circuit 121b correspondingly generates an input power difference PD and/or an input current difference ID based on the measured power value MP and/or the measured current value MI and the target reference power value Pref and/or the target reference current value Iref. The input signal control generation circuit 121c correspondingly generates an input current control signal CI based on the input power difference PD and/or the input current difference ID. In one embodiment, the input power command Pcmd includes a target input power value Ptg to be adjusted, and the input current command Icmd includes a target input current value Itg to be adjusted.

In one embodiment, the reference generation circuit 121a may be a counter, and the input signal difference generation circuit 121b may be an adder or a subtractor. In some embodiments, the reference generation circuit 121a, the input signal difference generation circuit 121b, and the input signal control generation circuit 121c may be implemented by using circuit elements such as a micro control unit (MCU) or a central processing unit (CPU), respectively, may be implemented by integrating into the same hardware element or implemented with a plurality of hardware elements, or may be implemented in hardware with firmware.

In one embodiment, when the reference generation circuit 121a receives the input power command Pcmd, when the target reference power value Pref is not equal to the target input power value Ptg of the input power command Pcmd, the reference generation circuit 121a gradually increases (when Ptg>Pref) or decreases (when Ptg<Pref), based on the power change rate command Prate, the target reference power value Pref to the target input power value Ptg of the input power command Pcmd.

In another embodiment, when the reference generation circuit 121a receives the input current command Icmd, when the target reference current value Iref is not equal to the target input current value Itg of the input current command Icmd, the reference generation circuit 121a gradually increases (when Itg>Iref) or decreases (when Itg<Iref), based on the current change rate command Irate, the target reference current value Iref to the target input current value Itg of the input current command Icmd.

For example, if the target input power value Ptg of the input power command Pcmd is 4000 W, a target reference power value Pref in an initial state is less than 4000 W, and the power change rate command Prate is 20 W/s (that is, increasing by 20 W per second), then the reference generation circuit 121a increases the target reference power value Pref by 20 W per second, and the target reference power value Pref gradually increases until the target reference power value Pref is equal to 4000 W.

If a current is used for control, assuming that a target current of the input current command Icmd is 3 A, a target reference current value Iref in an initial state is 0.5 A, and the current change rate command Irate is 0.1 A/s (that is, increasing by 0.1 A per second), then the reference generation circuit 121a increases the target reference current value Iref by 0.1 A per second, and the target reference current value Iref gradually increases until the target reference current value Iref is equal to 3 A.

Therefore, through the foregoing operation of the reference generation circuit 121a, the reference generation circuit 121a gradually changes the target reference power value Pref or the target reference current value Iref based on the power change rate command Prate or the current change rate command Irate, so that the power value or current value required by the power conversion circuit 110 for the fuel cell 200 changes to be less than or equal to the power change rate command Prate or the current change rate command Irate. In this embodiment, the reference generation circuit 121a operates only by using the combination of the input power command Pcmd and the power change rate command Prate, or operates only by using the combination of the input current command Icmd and the current change rate command Irate. In another embodiment, the reference generation circuit 121a may alternatively use two combinations (that is, Pcmd and Pref, and Icmd and Iref) together for operating.

The input signal difference generation circuit 121b is coupled to the reference generation circuit 121a and is configured to generate the input power difference PD based on at least one of the measured power value MP and the target reference power value Pref, or to generate the input current difference ID based on the measured current value MI and the target reference current value Iref.

The input signal control generation circuit 121c is coupled to the input signal difference generation circuit 121b and is configured to generate the input current control signal CI based on the input power difference PD or based on the input current difference ID. For example, the input signal control generation circuit 121c may use suitable control methods such as proportional control, integral control, derivative control, proportional-integral control, proportional-derivative control, and proportional-integral-derivative control, to generate the input current control signal CI based on at least one of the input power difference PD and the input current difference ID.

As shown in FIG. 3, the output current control circuit 122 may include a current integration circuit 122a and an output current controller 122b. The output voltage control circuit 123 may include a voltage integration circuit 123a and an output voltage controller 123b.

In the output voltage control circuit 123, the voltage integration circuit 123a may be implemented by using a manner, for example, an adder or a subtractor, and is configured to compare the reference voltage value Vref and the output voltage measurement value MV to generate a voltage difference value Vdif for the output voltage controller 123b, for example, Vdif=A*(MV-Vref), where A is an appropriate value. The output voltage controller 123b is coupled to the voltage integration circuit 123a, and generates the output voltage control signal Voc for the multiplexer 124 based on the voltage difference value Vdif. For example, the output voltage controller 123b may use suitable control methods such as proportional control, integral control, derivative control, proportional-integral control, proportional-derivative control, and proportional-integral-derivative control, to correspondingly generate the output voltage control signal Voc based on the voltage difference value Vdif.

In the output current control circuit 122, the current integration circuit 122a is coupled to the input signal control generation circuit 121c, and compares the input current control signal CI and the output current measurement value MO to generate a current difference value Idif for the output current controller 122b, for example, Idif=B*(MO-CI), where B is an appropriate value.

The output current controller 122b is coupled to the current integration circuit 122a, and generates an output current control signal Ioc for the multiplexer 124 based on the current difference value Idif. For example, the output current controller 122b may use suitable control methods such as proportional control, integral control, derivative control, proportional-integral control, proportional-derivative control, and proportional-integral-derivative control, to correspondingly generate the output current control signal Ioc based on the current difference value Idif.

The multiplexer 124 is coupled to the output voltage control circuit 123 and the output current control circuit 122, and generates a modulation control signal A1 based on the output voltage control signal Voc and the output current control signal Ioc. In one embodiment, the multiplexer 124 correspondingly generates the modulation control signal A1 based on only one of the output voltage control signal Voc and the output current control signal Ioc to control an operation mode of the signal modulation circuit 125. For example, when the output power provided by the power supply unit 100 is less than the required power of the load 300, the multiplexer 124 correspondingly generates the modulation control signal A1 based on the output current control signal Ioc, and gradually increases the output current of the power supply unit 100 at a rate acceptable to the fuel cell 200. In another example, when the output power provided by the power supply unit 100 is greater than the required power of the load 300, the multiplexer 124 correspondingly generates the modulation control signal A1 based on the output voltage control signal VoC to adjust the voltage output by the power supply unit 100 correspondingly. In other embodiments, the multiplexer 124 may correspondingly generate the modulation control signal A1 according to other determining conditions and only based on one of the output voltage control signal Voc and the output current control signal Ioc.

The signal modulation circuit 125 is coupled to the multiplexer 124, and generate the power conversion control signal Pc for the power conversion circuit 110 based on the modulation control signal A1. In one embodiment, the signal modulation circuit 125 may use a suitable signal format, for example, a pulse-width modulation (PWM), a pulse-frequency modulation (PFM), a pulse-skip modulation (PSM), or a pulse-phase modulation (PPM).

Therefore, through the foregoing operation of the power supply unit 100, the input signal control circuit 121 uses at least one of the two combinations (the combination of the input power command Pcmd and the power change rate command Prate, and the combination of the input current command Icmd and the current change rate command Irate) to adjust the target reference power value Pref to the target input power value Ptg at a rate acceptable to the fuel cell 200 (that is, the power change rate command Prate or the current change rate command Irate), or to adjust the target reference current value Iref to the target input current value Itg, and correspondingly generates the input current control signal CI based on at least one of the difference between the measured power value MP and the target reference power value Pref and the difference between the measured current value MI and the target reference current value Iref. The output current control circuit 122 generates the output current control signal Ioc based on the input current control signal CI, and the multiplexer 124 and the signal modulation circuit 125 correspondingly generate the power conversion control signal Pc for the power conversion circuit 110 based on at least one of the output voltage control signal Voc and the output current control signal Ioc, so that the power conversion circuit 110 adjusts the input power (that is, the input current Iin and the input voltage Vin) and the output power (that is, the output current Iout and the output voltage Vout) of the power supply unit 100 at a rate acceptable to the fuel cell 200 based on the power conversion control signal Pc.

The circuit blocks included in the input signal control circuit 121, the output current control circuit 122, and the output voltage control circuit 123 of the embodiment of FIG. 3 are only used for illustration. The input signal control circuit 121, the output current control circuit 122, and the output voltage control circuit 123 may alternatively be implemented by using one or more circuit blocks, separately. In another embodiment, the input signal control circuit 121, the output current control circuit 122, and the output voltage control circuit 123 may alternatively be implemented separately by using one or more hardware elements in combination with software, and may be implemented by integrating the same hardware element or using a plurality of hardware elements.

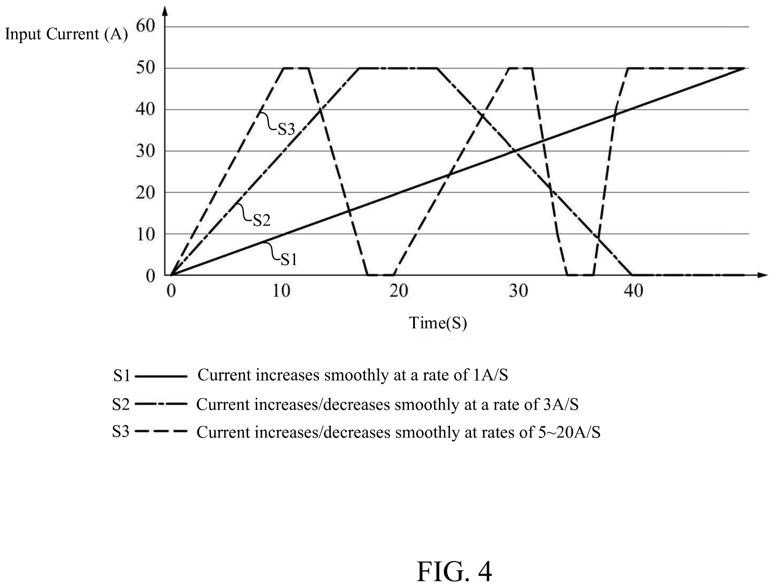

FIG. 4 is a timing diagram of a change in a current magnitude when a power supply unit 100 of the present disclosure adjusts an input current Iin input from a fuel cell 200. In the present disclosure, the power supply unit 100 controls the change of its input current Iin based on the power change rate command Prate or the current change rate command Irate for adjustment, rather than being affected by the current control device. Because there is no need to dispose the current control device, the current from the fuel cell does not need to wait for the reaction time of the current control device to cause additional delay. The input current Iin rises and falls linearly as shown in FIG. 4, and does not in the step-like rise or fall shown in FIG. 1 due to the restriction of the reaction rate. In addition, the input current may reach an expected target level faster because there is no need to wait for the reaction time of the current control device. Therefore, as shown by a curve S1 (changing at 1 A/S), a curve S2 (3 A/S), and a curve S3 (5 A/S to 20 A/S) in the embodiment of FIG. 4, it can be seen that through the operation of the power supply unit 100 in the present disclosure, the output current or output power (and its rate of change) of the power conversion circuit 110 is set correspondingly by means of the power change rate command Prate or the current change rate command Irate, the measured current value MI, the measured power value MP, the output voltage measurement value MV, and the output current measurement value MO, and the input current or input power of the power conversion circuit 110 can change correspondingly at a rate acceptable to the fuel cell 200. Therefore, the output current/power of the power supply unit 100 can be increased or decreased in real time, which not only increases the system performance of the power supply unit 100, but also reduces the consumption of the fuel cell 200 and prolongs its service life.

Although the present disclosure has been disclosed in the foregoing implementations, this is not intended to limit the present disclosure. Persons having ordinary skill in the art can make various changes and modifications without departing from the spirit and scope of the present disclosure. Therefore, the scope of the protection of the present disclosure shall be defined by the scope of the appended claims.

## Claims

1. A power supply unit, configured to be coupled to a fuel cell and a load, comprising:
a power conversion circuit, comprising a power conversion input end configured to be coupled to the fuel cell and a power conversion output end configured to be coupled to the load, wherein the power conversion circuit generates an electric power output signal to the load based on an electric power input signal of the fuel cell; and
a control circuit, coupled to the power conversion circuit and configured to:
generate an input current control signal based on an input power command and a power change rate command or based on an input current command and a current change rate command, and also based on a measured power value or a measured current value;
generate an output current control signal based on the input current control signal and an output current measurement value;
generate an output voltage control signal based on a reference voltage value and an output voltage measurement value; and
generate a power conversion control signal based on at least one of the output current control signal and the output voltage control signal to control the power conversion circuit to adjust a power of the electric power input signal of the fuel cell based on the power change rate command, or to control the power conversion circuit to adjust a current of the electric power input signal of the fuel cell based on the current change rate command.

2. The power supply unit according to claim 1, wherein the control circuit comprises an input signal control circuit, which comprises:
a reference generation circuit, configured to generate a target reference power value or a target reference current value based on the input power command and the power change rate command or based on the input current command and the current change rate command;
an input signal difference generation circuit, configured to generate an input power difference or an input current difference based on the measured power value and the target reference power value or based on the measured current value and the target reference current value; and
an input signal control generation circuit, to generate the input current control signal based on the input power difference or the input current difference.

3. The power supply unit according to claim 1, wherein the control circuit further comprises:
an output current control circuit, configured to compare the input current control signal and the output current measurement value to generate a current difference value, and generate the output current control signal based on the current difference value; and
an output voltage control circuit, configured to compare the reference voltage value and the output voltage measurement value to generate a voltage difference value, and generate the output voltage control signal based on the voltage difference value;
a multiplexer, configured to generate a modulation control signal based on the output current control signal or the output voltage control signal; and
a signal modulation circuit, configured to generate the power conversion control signal based on the modulation control signal.

4. The power supply unit according to claim 3, wherein
when an output power provided by the power supply unit is less than a required power of the load, the multiplexer correspondingly generates the modulation control signal based on the output current control signal; and
when the output power provided by the power supply unit is greater than the required power of the load, the multiplexer correspondingly generates the modulation control signal based on the output voltage control signal.

5. An operating method of a power supply unit, comprising:
receiving an electric power input signal from a fuel cell;
correspondingly generating an input current control signal based on an input power command and a power change rate command or based on an input current command and a current change rate command, and based on a measured power value or a measured current value;
generating an output current control signal based on the input current control signal and an output current measurement value;
generating an output voltage control signal based on a reference voltage value and an output voltage measurement value; and
generating a power conversion control signal based on at least one of the output current control signal and the output voltage control signal, to control the power supply unit to adjust a power of the electric power input signal of the fuel cell based on the power change rate command, or to control the power supply unit to adjust a current of the electric power input signal of the fuel cell based on the current change rate command.

6. The operating method according to claim 5, further comprising:
correspondingly outputting an electric power output signal to a load based on the output current control signal and the output voltage control signal.

7. The operating method according to claim 5, further comprising:
correspondingly generating a target reference power value or a target reference current value based on the input power command and the power change rate command or based on the input current command and the current change rate command;
correspondingly generating an input power difference or an input current difference based on the measured power value and the target reference power value or based on the measured current value and the target reference current value; and
generating the input current control signal based on the input power difference or the input current difference.

8. The operating method according to claim 5, further comprising:
comparing the input current control signal and the output current measurement value to generate a current difference value, and generating the output current control signal based on the current difference value; and
comparing the reference voltage value and the output voltage measurement value to generate a voltage difference value, and generating the output voltage control signal based on the voltage difference value;
generating a modulation control signal based on the output current control signal or the output voltage control signal; and
generating the power conversion control signal based on the modulation control signal.

9. The operating method according to claim 8, wherein
when an output power provided by the power supply unit is less than a required power of a load, a modulation control signal is correspondingly generated based on the output current control signal; and
when the output power provided by the power supply unit is greater than the required power of the load, the modulation control signal is correspondingly generated based on the output voltage control signal.
